# EUROPEAN PATENT SPECIFICATION

(11) **EP 2 537 164 B1**
(45) Date of publication and mention of the grant of the patent: **07.03.2018**
(21) Application number: 11713385.0
(22) Date of filing: 18.02.2011
(51) Int. Cl.: H01C 7/12, H01H 37/08, H02H 9/04

(54) **EXCESS VOLTAGE CIRCUIT-BREAKER WITH A ROTATIONAL DISC AND AN ELECTRONIC ASSEMBLY TO IMPROVE OPERATION RELIABILITY**
ÜBERSPANNUNGSSCHUTZSCHALTER MIT EINER DREHSCHEIBE UND EINER ELEKTRONISCHEN ANORDNUNG FÜR HÖHERE BETRIEBSZUVERLÄSSIGKEIT
COUPE-CIRCUIT POUR SURTENSION COMPRENANT UN DISQUE DE ROTATION ET ENSEMBLE ÉLECTRONIQUE POUR AMÉLIORER LA FIABILITÉ DU FONCTIONNEMENT

(30) Priority: 19.02.2010 SI 201000063
(43) Date of publication of application: 26.12.2012
(73) Proprietor: CRDCE d.o.o., 1000 Ljubljana (SI)
(72) Inventor: BURGER, Miran, 1111 Ljubljana (SI); VUKOTIC, Milenko, 1111 Ljubljana (SI); JURICEV, Igor, 6310 Izola (SI)
(74) Representative: Flak, Antonija
(86) International application number: PCT/SI2011/000008
(87) International publication number: WO 2011/102811

(56) References cited:
- DE-A1- 19 623 541
- DE-A1-102008 013 448
- US-A1- 2003 086 235

## Description

### Field of Invention

The invention relates to an excess voltage protecting device intended to protect electric and electronic devices against the effects of electric arc and electric thermal overload of varistors that appear as a result of lightning strokes and transitional phenomena in low-voltage networks, which reflect in increased voltage.

### Technical Problem

A technical problem solved by the present invention is a constructional solution to a mechanical disconnection of a terminal clamp of an excess voltage protected element based on e. g. spark gaps, varistors, semi-conductors like diodes, thyristors and similar elements in case of electric arc and electric thermal overload. The solution must provide for a quick response to a sudden voltage phenomenon, wherein remote signalisation of trouble and timely reporting on the trouble location is important as well. Quick operation of disconnection is important, since there exists a possibility of long-term increased voltage, which may be present for several hours or, even days. This can lead to destruction of an excess voltage circuit breaker, which can in a worst case scenario cause fire.

### Prior Art

Excess voltage circuit breakers are electric devices used to limit excess voltages in electric-energetic systems. Excess voltages differ in length of duration and are therefore classified in two groups: a first group is transient voltages caused by switch manipulations and excess voltages caused by atmospheric discharges and the second group is the so-called temporary overvoltages caused by defects in networks like short circuits, high-voltage system circuits, loss of neutral conductor, instable network and the like.

Known components of excess voltage circuit breakers are for instance spark gaps, varistors, and diodes to mention just the most widely used ones. They all have in common that they switch to a conductive status at an increased voltage and discharge the increased voltage in direction towards the ground via protected conductor.

Problems are encountered especially when long-term increased voltages are present for several hours or even days, which can lead to destruction of the excess voltage circuit breaker and in the worst case scenario to fire. Several ways of solving these situations or problems are known and they all share a common property, they namely exploit transition of the above-mentioned components to a conductive state. After transition to a conductive state the excess voltage circuit breaker disconnects the excess voltage protection or a differential current switch from the network, or a device adapted thereto, which detects increased current in direction towards the protected conductor. These additional solutions may be external, however, there also exist the so-called internal solutions, in which further protecting elements are integrated into an integral housing. Several problems appear in this connection, namely the excess voltage circuit breakers do not keep the same properties as they had before the added solutions.

Several solutions are commercially available and solve a problem of electric arc and electric thermal overload in varistors.

One solution is known from patent US 6430019, in which electric arc occurrence at critical heating of a varistor is prevented by a barrier that moves in translation into the gap between the disconnected electrodes and varistor body and separates the overheated varistor body from the connecting electrode thus preventing electric arc.

The solution known from DE 10 2007 051854 is a known disconnection device based on at least one excess voltage arrester, like a varistor, and a disconnecting device for separating the excess voltage disconnecting device from electric network. A drawback of this solution lies in that at increased voltage on the varistor no reliable disconnection is ensured in all modes of varistor overload. In case a varistor would move to a state of short-circuit prior to functioning of a thermal disconnection, the excess voltage protection in series will likely operate with limits and inefficiently.

The patent application DE 10 2008 013 448 describes a circuit breaker connected in parallel with the device it protects and disconnects it, when the pre-set distance for the separation in the circuit breaker is reached.

DE 196 23 541 A1 describes a voltage limiting circuit.

The mentioned known solutions do not provide an optimal solution to the problems related to the occurrence of electric arc in excess voltage protecting devices with varistors. A problem of preventing leakage current, over which electric thermal overload of varistors is established and in case of insufficient disconnection also electric arc which can increase to a destructive size remain unsolved.

### Solution to the Technical Problem

The essential point of an excess voltage circuit breaker with a rotational disc and an electronic assembly to improve operation reliability lies in that the rotational circuit breaker of a varistor is electronically triggered by means of para gas disconnectors and/or resistance with a positive thermal characteristic immediately after increased electric voltage is detected on the varistor. As a flux of a disconnection electrode starts melting, a spring moves a rotational disk under the disconnection electrode, which interrupts possible electric arc between the previously unprotected surface of the varistor and the disconnection electrode. The rotational disk is designed in a way to extend this distance up to distances prescribed by standards. A latching plate of the indicator releases the indicator, which moves towards a gap on the housing and thus clearly indicates that the varistor is disconnected from active parts of the network.

The excess voltage circuit breaker with a rotational disk and an electronic assembly to improve operation reliability according to the invention as defined by the features of claim 1 will now be described in more detail by way of drawings, representing in:

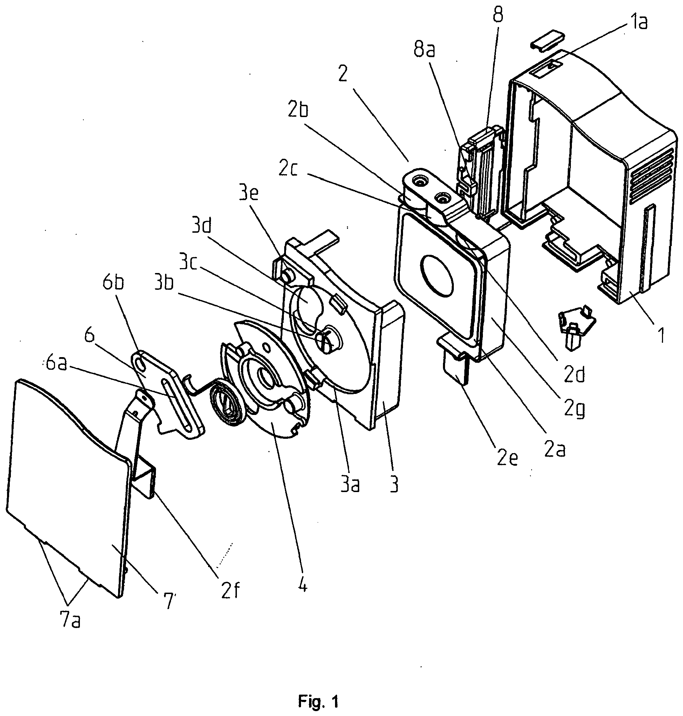

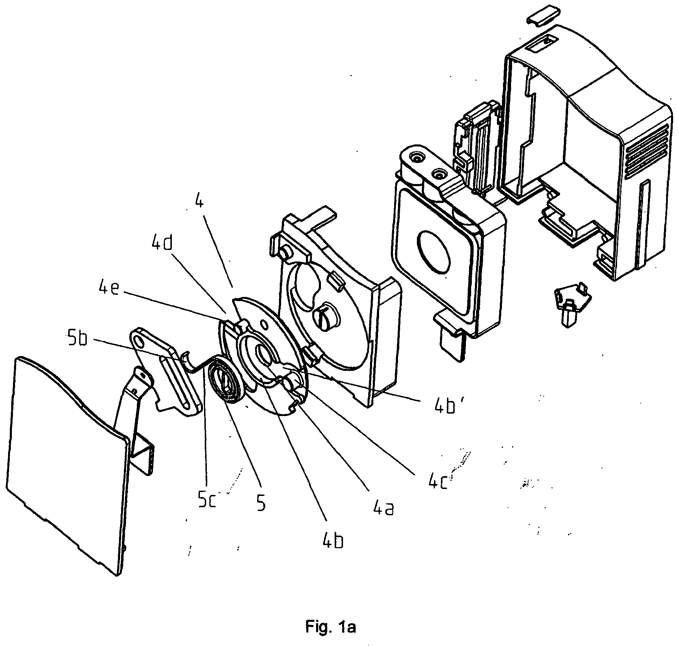

Figure 1 - assembly of an excess voltage circuit breaker of the invention
Figure 1a - assembly of an excess voltage circuit breaker of the invention

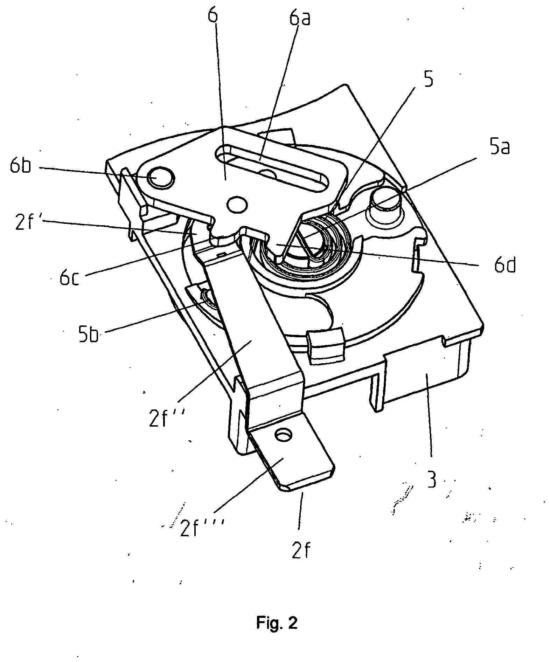

Figure 2 - rotational circuit breaker

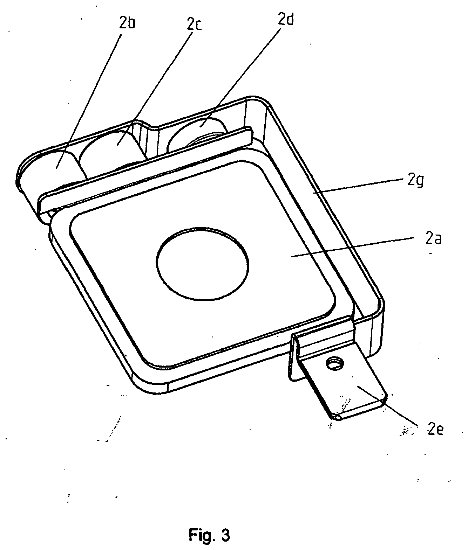

Figure 3 - electronic component 2 of the invention
Figure 4 - diagram of the electronic component of the invention
Figure 5 - diagram of the electronic component 2 according to variant II

The excess voltage circuit breaker of the invention comprises a housing 1 with a component 2 with a varistor 2a, gas circuit breakers 2b and 2c and a resistor 2d with positive thermal characteristic. The varistor 2a has connection electrodes 2e and 2f. A frame 2g simultaneously functions as an electrode 2e protruding from the housing 1. A holder 3 of a rotational disc 4 is arranged on the frame 2g of the component 2. The holder 3 has a shallow round recess 3a with a convex cylindrical attachment 3b with a slot 3c in the middle. An oval opening 3d is arranged in the bottom of the round recess 3a. The rotational disc 4 is provided with a round hole 4a in the centre which is surrounded by a low circular ring 4b with a narrow opening 4b' close to a cylindrical attachment 4c. At the opposite side of the cylindrical attachment 4c there is an opening 4d in the disc 4, said opening starting with a cylindrical attachment 4e. The circular ring 4b has the same height as a spring 5, said spring 5 being designed in a way to start with a part 5a which is straight and forms with the first semi-circular turn a capital letter D. The spring 5 winds around this part in a way that the second part of the spring 5 in the line of the part 5a is again straight and terminates with a semi-circular part 5b, which forms together with the straight part 5c a mirror image of a capital letter J.

A latching plate 6 has an oblong opening 6a and a round opening 6b. The plate 6 has a protrusion 6c at the opposite side of the opening 6a. After a short straight part after the protrusion 6c there is a protrusion 6d. The circuit breaker is closed within the housing 1 with a cover 7 imitating the shape of the bottom of the housing 1. The cover 7 has two plugs 7a for closing constituent parts of the excess voltage circuit breaker of the invention into the housing 1.

The housing 1 of the excess voltage circuit breaker houses a component 2 comprising a varistor 2a body having a flat shape, preferably a square or oval shape. The holder 3 of the rotational circuit breaker 4 is arranged on the frame 2g of the component 2 in a way that connection part of frame 2g is electrode 2e of varistor 2a. connecting terminal 2f is arranged on the body of the varistor 2a through the opening 3d, said terminal 2f being shaped in a way to have a bent part 2f in contact with the varistor 2a. The contact is soldered with a temperature sensitive flux. A second part 2f" is straight and bent in a part 2f" in a way to be parallel with the terminal 2e. The opening 3d has a size and shape to allow for a simple arrangement of a disconnection electrode 2f of the varistor 2a and is positioned at such angular distance from the starting position of the rotational disc 4 that the rotational disc 4 in its end position covers it after having rotated around the cylindrical attachment 3b. The electrode 2f is arranged on the varistor 2a through the opening 3d by means of a temperature sensitive flux and fastened to the upper side of the varistor 2a body. The terminal 2f holds in this position the rotational disk 4 in its starting position together with the spiral spring 5 in a biased state.

The rotational disc 4 is pivoted in the shallow recess 3a and through the round hole 4a to the cylindrical holder 3b of the holder 3. In the centre of the shallow recess 3a delimited by a low circular ring 4b there is the spring 5, the straight part 5a of which is latched in the slot 3c on the holder 3b. After the terminal 2f is arranged through the opening 3d and the opening 4d in the disc 3, the second part of the spring 5 with the semi-circular part 5b is arranged around the cylindrical attachment 4e. The hole 6b of the latching plate 6 is inserted in the cylindrical attachment 3e of the holder 3 and simultaneously also in the oblong hole 6a and to the cylindrical attachment 4e of the rotational disc 4. The protrusion 6d is inserted into a bearing 8a of an indicator 8 of start situation signalisation.

When the varistor 2a body critically heats due to voltage current surges and due to an increase in the current through the varistor 2a body, the temperature sensitive flux that connects the disconnection electrode 2f to the varistor 2a body gets melted. The disconnection electrode 2f is thus free and moves through the opening 3d in the holder 3 to an unstressed position and consequently releases the rotational disc 4, which was in the initial position up to this moment. The force of the spring 5 is exerted on the rotational disc 4 and the latter turns around the holder 3b to an end position, in which it covers the opening 3d in the holder 3 of the rotational disc 4. Influenced by the spring force of the spiral spring 5 the rotational disc 4 moves with high angular velocity from one end position to another end position and covers the opening 3d in the holder 3, thus preventing the occurrence of electric arc. The movement of the rotational disc 4 triggers the latching plate 6, which shifts the indicator 8 with its attachment 6d towards the opening of the housing 1a.

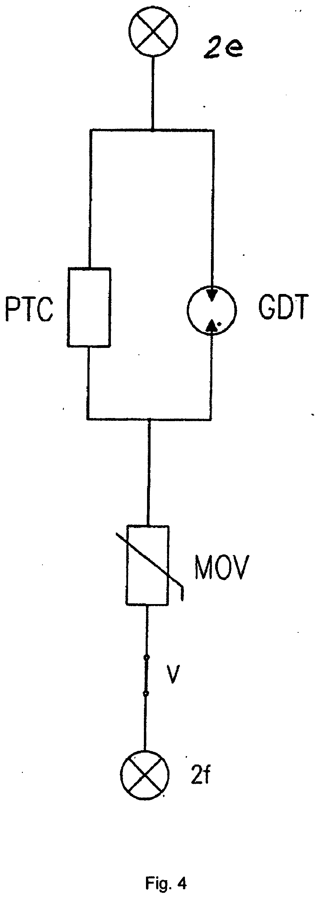

Figure 4 shows a block diagram of the component 2 having a parallel connected PTC resistor and a GDT gas circuit breaker as well as series connected MOV varistor between the terminals of electrodes 2e and 2f. The electronic assembly of the component 2 comprises a resistor 2d with a positive thermal coefficient that is connected in parallel to the GDT gas circuit breaker. In the present embodiment, the PTC resistor is the resistor 2d. The GDT circuit breaker in the embodiment comprises gas circuit breakers 2b and 2c. A common exit point of the resistor 2d and the GDT circuit breaker is via thermal member V, which is simultaneously the connecting electrode 2f arranged on the varistor 2a body. The electronic assembly of the component 2 operates in the so-called discrimination mode, which means that in case of rapid transitional events the GDT gas circuit breaker branch is operable and in case of sporadically increased voltages the branch via resistor 2d is operable. The essence of functioning of the resistor 2d with positive thermal coefficient is to limit current through the varistor 2a, when the impressed voltage on connection terminals exceeds the voltage threshold of the varistor 2a. This is the key difference in comparison with other manufacturers: the varistor 2a shifts to a low ohmic state, which allows high current to run via varistor 2a and enables the functioning of external over-current protection.

According to embodiment I, the electronic assembly of the component (2) has a circuit breaker (GDT) consisting of gas circuit breakers.

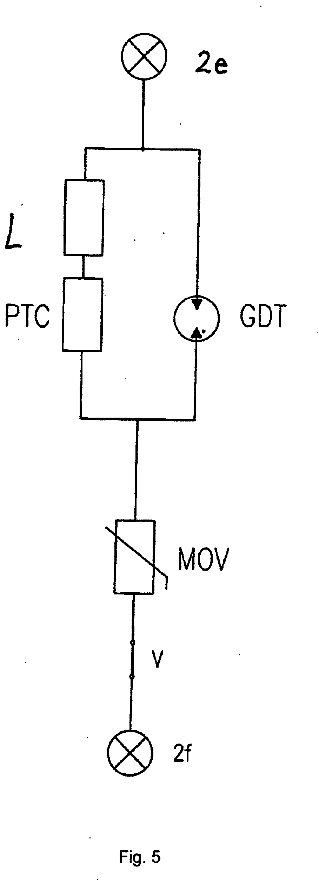

According to embodiment II, the electronic assembly of the component 2 with an improved property of protected levels of entire excess voltage protecting device has a choke L integrated in the circuit, which is shown in Figure 5.

The solution of the invention reduces a possibility of occurrence of electric arc by an embodiment of the movable rotational disc 4 together with the electronic assembly of the component 2, where in cases of rapid transitional events the branch with the GDT gas circuit breaker is operable and in case of sporadically increased voltages the branch via the resistor 2d is operable. Under the influence of spring force of the spiral spring said rotational disc, after the electrode 2f has been disconnected, shifts from one end position to another end position at high angular velocity and covers the opening in the holder of the rotational disc thus preventing the occurrence of electric arc.

## Claims

1. An excess voltage circuit breaker with a rotational disc (4) and an electronic assembly of a component (2) to improve operation reliability, wherein the electronic
1. An excess voltage circuit breaker with a rotational disc and an electronic assembly of the component (2) comprises a resistor with positive thermal coefficient that is connected in parallel with a a GDT gas circuit breaker that consists in gas circuit breakers (2b and 2c); that the common point of exit of the resistor (2d) and the GDT gas circuit breaker is via thermal member (V), which is simultaneously a first connection electrode (2f) arranged on a varistor (2a) body; that the electronic assembly of the component (2)functions in a way that in case of rapid transitional events a branch with the GDT gas circuit breaker is operable, and in case of sporadically increased voltages the branch via resistor (2d) is operable; that the resistor (2d) with positive thermal coefficient is configured to limit the current through the varistor (2a), when the impressed voltage on connection terminals exceeds the voltage threshold of the varistor (2a); that the varistor (2a) is configured to shift to a low ohmic state, which allows that high current runs via the varistor (2a) and thus enables the functioning of external over-current protection; **characterized in that** a shift of the first connection electrode (2f) triggers a rotating the movement of the rotational disc (4).

2. Excess voltage circuit breaker as claimed in Claim 1, **characterized in that** the electronic assembly of the component (2) has a choke (L) integrated.

3. Excess voltage circuit breaker as claimed in any of Claims 1 to 2, **characterized in that** the component (2) with the varistor (2a), gas circuit breakers (2b and 2c) and resistor (2d) with positive thermal coefficient are arranged within a housing (1); that the varistor (2a) has a second connection electrode (2e); that a frame (2g) of the component (2) is simultaneously the second connection electrode (2e) and which protrudes from the housing (1); that a holder (3) of the rotational disc (4) is arranged on the frame (2g) of the component (2); that the holder (3) has a shallow round recess (3a) with a convex first cylindrical attachment (3b) with a slot (3c) in the middle; that an oval opening (3d) is arranged in the bottom of the shallow round recess (3a); that the rotational disc (4) has a round hole (4a) in the centre and a low circular ring (4b) with a narrow opening (4b') around it in the vicinity of a second cylindrical attachment (4c); that an opening (4d) is arranged on the opposite side of the second cylindrical attachment (4c) in the disc (4), said opening (4d) beginning with a third cylindrical attachment (4e); that the circular ring (4b) has the same height as a spring (5) which is designed in a way to start with a first part (5a) that is straight and forms with the first semicircular bend capital letter D; that the spring (5) is wound around the first part (5a) in a way that a second part of the spring in the line of the first part (5a) is again partially straight and terminates with a semi-circular part (5b) which forms together with the straight part (5c) a mirror image of the capital letter J; that a latching plate (6) has an oblong opening (6a) and a round opening (6b); that the plate (6) has opposite the oblong opening (6a) a protrusion (6c), which is followed after a short straight part by a further protrusion (6d); that the housing (1) is closed with a cover (7) by means of two plugs (7a); that the component (2) is arranged in the housing (1); that the holder (3) of the rotational disc (4) is arranged on the frame (2g) of the component (2) in a way that the connecting part of the frame (2g) is simultaneously the second connection electrode (2e) of the varistor (2a); that through the oval opening (3d) the first connection electrode (2f) is arranged on the varistor (2a) body, said first connection electrode (2f) being designed in a way to have a bent part (2f) in contact with the varistor (2a); that a second part (2f') of the first connection electrode (2f) is straight and bent in a part (2f") in a way to be parallel with the second connection electrode (2e); that the oval opening (3d) has such size and shape that the first connection electrode (2f) of the varistor (2a) is simply insertable therethrough, the oval opening (3d) being positioned at such angular distance from the starting position of the rotational disc (4) that the rotational disc (4) after having rotated around the first cylindrical attachment (3b) covers the oval opening (3d) when the disc (4) is in its end position; that the first connection electrode (2f) is arranged through the oval opening (3d) to the varistor (2a) by means of temperature sensitive flux and fastened on the upper side of the varistor (2a) body; that the first connection electrode (2f) holds the rotational disc (4) in its start position together with the spiral spring (5) in a biased state; that the rotational disc (4) is rotatingly arranged in the shallow round recess (3a) and through the round hole (4a) onto the first cylindrical attachment (3b) of the holder (3); that the spring (5) is arranged in the centre of the shallow round recess (3a) delimited by the low circular ring (4b), the first part (5a) of the spring (5) being snapped in the slot (3c) on the holder (3); that after the arrangement of the first connection electrode (2f) through the oval opening (3d) and the opening (4d) in the disc (4) the second part of the spring (5) with the semi-circular part (5b) is arranged around the third cylindrical attachment (4e); that the opening (6b) of the latching plate (6) is inserted into a further cylindrical attachment (3e) of the holder (3) and simultaneously the oblong opening (6a) into the thirdcylindrical attachment (4e) of the rotational disc (4); that the further protrusion (6d) inserted in a bearing (8a) is an indicator (8) of signalisation of initial state.

## Patentansprüche

1. Ein Überspannungsschutzschalter mit einer Drehscheibe (4) und einer elektronischen Anordnung eines Bauteils (2) zur Verbesserung der Betriebszuverlässigkeit, wobei die elektronische Anordnung des Bauteils (2) einen Widerstand mit positivem Temperaturkoeffizienten aufweist, der parallel zu einem GDT-Gasleistungsschalter, der aus Gasleistungsschaltern (2b und 2c) besteht, geschaltet ist; dass der gemeinsame Ausgangspunkt des Widerstands (2d) und des GDT-Gasleistungsschalters über ein thermisches Glied (V) erfolgt, das gleichzeitig eine, an einem Körper des Varistors (2a) angeordnete, erste Anschlusselektrode (2f) ist; dass die elektronische Anordnung des Bauteils (2) derart funktioniert, dass bei schnellen Übergangsereignissen ein Abzweig mit dem GDT-Gasleistungsschalter betreibbar ist, und bei sporadisch erhöhten Spannungen der Abzweig über den Widerstand (2d) betreibbar ist; dass der Widerstand (2d) mit positivem Temperaturkoeffizienten dazu ausgebildet ist, den Strom durch den Varistor (2a) zu begrenzen, wenn die angewandte Spannung an den Anschlussklemmen die Spannungsschwelle des Varistors (2a) überschreitet; dass der Varistor (2a) dazu ausgebildet ist, in einen niederohmigen Zustand zu schalten, der es ermöglicht, dass über den Varistor (2a) Hochstrom fließt und somit die Funktion eines externen Überstromschutzes ermöglicht wird; **dadurch gekennzeichnet, dass** eine Verschiebung der ersten Anschlusselektrode (2f) eine Drehbewegung der Drehscheibe (4) auslöst.

2. Überspannungsschutzschalter nach Anspruch 1, **dadurch gekennzeichnet, dass** die elektronische Anordnung des Bauteils (2) eine integrierte Drossel (L) aufweist.

3. Überspannungsschutzschalter nach einem der Ansprüche 1 bis 2, **dadurch gekennzeichnet, dass** das Bauteil (2) mit dem Varistor (2a), die Gasleistungsschalter (2b und 2c) und der Widerstand (2d) mit positivem Temperaturkoeffizienten innerhalb eines Gehäuses (1) angeordnet sind; dass der Varistor (2a) eine zweite Anschlusselektrode (2e) aufweist; dass ein Rahmen (2g) des Bauteils (2) gleichzeitig als die zweite Anschlusselektrode (2e) fungiert und aus dem Gehäuse (1) herausragt; dass ein Halter (3) der Drehscheibe (4) an dem Rahmen (2g) des Bauteils (2) angeordnet ist; dass der Halter (3) eine flache runde Ausnehmung (3a) mit einem konvexen ersten zylindrischen Ansatz (3b) mit einem Schlitz (3c) in der Mitte aufweist; dass im Boden der flachen runden Ausnehmung (3a) eine ovale Öffnung (3d) angeordnet ist; dass die Drehscheibe (4) in der Mitte ein rundes Loch (4a) und einen niedrigen, kreisförmigen Ring (4b) mit einer engen Öffnung (4b') herum in der Nähe eines zweiten zylindrischen Ansatzes (4c); dass an der gegenüberliegenden Seite des zweiten zylindrischen Ansatzes (4c) eine Öffnung (4d) in der Scheibe (4) angeordnet ist, wobei die Öffnung (4d) mit einem dritten zylindrischen Ansatz (4e) beginnt; dass der kreisförmige Ring (4b) die gleiche Höhe wie eine Feder (5) aufweist, die dazu ausgelegt ist, mit einem ersten Teil (5a) zu beginnen, der gerade ist und mit dem ersten Halbkreisbogen den Großbuchstaben D bildet; dass die Feder (5) derart um den ersten Teil (5a) gewickelt ist, dass ein zweiter Teil der Feder in der Linie des ersten Teils (5a) wieder teilweise gerade ist und in einem halbkreisförmigen Teil (5b) endet, der zusammen mit dem geraden Teil (5c) ein Spiegelbild des Großbuchstabens J bildet; dass eine Rastplatte (6) eine längliche Öffnung (6a) und eine runde Öffnung (6b) aufweist; dass die Platte (6) gegenüber der länglichen Öffnung (6a) einen Vorsprung (6c) aufweist, dem nach einem kurzen geraden Teil ein weiterer Vorsprung (6d) folgt; dass das Gehäuse (1) mit einem Deckel (7) mittels zweier Stifte (7a) geschlossen ist; dass das Bauteil (2) im Gehäuse (1) angeordnet ist; dass der Halter (3) der Drehscheibe (4) am Rahmen (2g) des Bauteils (2) derart angeordnet ist, dass der Anschlussteil des Rahmens (2g) gleichzeitig die zweite Anschlusselektrode (2e) des Varistors (2a) ist; dass durch die ovale Öffnung (3d) die erste Anschlusselektrode (2f) auf dem Körper des Varistors (2a) angeordnet ist, wobei die erste Anschlusselektrode (2f) derart ausgebildet ist, dass sie einen, mit dem Varistor (2a) in Kontakt stehenden Biegeteil (2f') aufweist; dass ein zweiter Teil (2f") der ersten Anschlusselektrode (2f) geradlinig und in einem Teil (2f"') derart gebogen ist, dass er parallel zur zweiten Anschlusselektrode (2e) ist; dass die ovale Öffnung (3d) eine derartige Größe und Form aufweist, dass die erste Anschlusselektrode (2f) des Varistors (2a) einfach hindurchsteckbar ist, wobei die ovale Öffnung (3d) in einem solchen Winkelabstand von der Ausgangsposition der Drehscheibe (4) positioniert ist, dass die Drehscheibe (4) nach dem Drehen um den ersten zylindrischen Ansatz (3b) die ovale Öffnung (3d) abdeckt, wenn sich die Scheibe (4) in ihrer Endposition befindet; dass die erste Anschlusselektrode (2f) durch die ovale Öffnung (3d) zum Varistor (2a) mittels temperatursensitivem Fluss angeordnet ist und an der Oberseite des Körpers des Varistors (2a) befestigt ist; dass die erste Anschlusselektrode (2f) die Drehscheibe (4) zusammen mit der Spiralfeder (5) in einem vorgespannten Zustand in ihrer Startposition hält; dass die Drehscheibe (4) in der flachen runden Ausnehmung (3a) und durch das Rundloch (4a) auf dem ersten zylindrischen Ansatz (3b) des Halters (3) drehbar angeordnet ist; dass die Feder (5) in der Mitte der durch den niedrigen Kreisring (4b) begrenzten flachen, runden Ausnehmung (3a) angeordnet ist, wobei der erste Teil (5a) der Feder (5) im Schlitz (3c) am Halter (3) eingerastet ist; dass nach der Anordnung der ersten Anschlusselektrode (2f) durch die ovale Öffnung (3d) und die Öffnung (4d) in der Scheibe (4) der zweite Teil der Feder (5) mit dem halbkreisförmigen Teil (5b) um den dritten zylindrischen Ansatz (4e) angeordnet ist; dass die Öffnung (6b) der Rastplatte (6) in einen weiteren zylindrischen Ansatz (3e) des Halters (3) eingesetzt ist und gleichzeitig die längliche Öffnung (6a) in den dritten zylindrischen Ansatz (4e) der Drehscheibe (4) eingesetzt ist; dass der in einem Lager (8a) eingesetzte weitere Vorsprung (6d) ein Indikator (8) zur Signalisierung eines Ausgangszustands ist.

## Revendications

1. Un coupe-circuit pour surtension comprenant un disque de rotation (4) et un ensemble électronique d'un composant (2) pour améliorer la fiabilité de fonctionnement, l'ensemble électronique du composant (2) comprenant une résistance à coefficient thermique positif qui est connectée en parallèle à un coupe-circuit à gaz GDT qui consiste en des coupe-circuits à gaz (2b et 2c); que le point commun de sortie de la résistance (2d) et du coupe-circuit à gaz GDT passe par un élément thermique (V), qui est simultanément une première électrode de connexion (2f) agencée sur un corps de varistance (2a); que l'ensemble électronique du composant (2) fonctionne de telle manière que, lorsque des événements de transition rapide se produisent, la branche avec le coupe-circuit à gaz GDT fonctionne et que, en cas d'augmentations sporadiques de tensions, la branche passant par la résistance (2d) fonctionne; que la résistance (2d) ayant un coefficient thermique positif est configurée pour limiter le courant à travers la varistance (2a), lorsque la tension appliquée sur les bornes de connexion dépasse le seuil de tension de la varistance (2a); que la varistance (2a) est configurée pour passer à un état ohmique bas, ce qui assure qu'un courant élevé circule par l'intermédiaire de la varistance (2a) et permet ainsi le fonctionnement d'une protection externe contre les surintensités; **caractérisé en ce qu'**un mouvement de la première électrode de connexion (2f) déclenche le mouvement de rotation du disque de rotation (4).

2. Coupe-circuit pour surtension selon la revendication 1, **caractérisé en ce que** l'ensemble électronique du composant (2) présente une bobine d'arrêt (L) intégrée.

3. Coupe-circuit pour surtension selon l'une quelconque des revendications 1 à 2, **caractérisé en ce que** le composant (2) avec la varistance (2a), des coupe-circuits à gaz (2b et 2c) et une résistance (2d) ayant un coefficient thermique positif sont agencés à l'intérieur d'un boîtier (1); **en ce que** la varistance (2a) présente une seconde électrode de connexion (2e); **en ce qu'**un cadre (2g) du composant (2) est simultanément la seconde électrode de connexion (2e) et fait saillie à l'extérieur du boîtier (1); **en ce qu'**un support (3) du disque de rotation (4) est disposé sur le cadre (2g) du composant (2); **en ce que** le support (3) présente un évidement circulaire peu profond (3a) avec une première fixation cylindrique convexe (3b) dotée d'une fente (3c) au milieu; **en ce qu'**une ouverture ovale (3d) est disposée dans le fond de l'évidement circulaire peu profond (3a); **en ce que** le disque de rotation (4) comporte un trou circulaire (4a) au centre et une bague circulaire basse (4b) avec une ouverture étroite (4b') autour de celui-ci au voisinage d'une seconde fixation cylindrique (4c); **en ce qu'**une ouverture (4d) est disposée sur le côté opposé de la seconde fixation cylindrique (4c) dans le disque (4), ladite ouverture (4d) commençant par une troisième fixation cylindrique (4e); **en ce que** la bague circulaire (4b) a la même hauteur qu'un ressort (5) qui est conçu de manière à commencer avec une première partie (5a) qui est rectiligne et forme avec la première courbure semi-circulaire une lettre majuscule D; **en ce que** le ressort (5) est enroulé autour de la première partie (5a) de telle sorte qu'une seconde partie du ressort dans l'alignement de la première partie (5a) est à nouveau partiellement rectiligne et se termine par une partie semi-circulaire (5b) qui forme avec la partie rectiligne (5c) une image miroir de la lettre majuscule J; **en ce qu'**une plaque de verrouillage (6) présente une ouverture oblongue (6a) et une ouverture circulaire (6b); **en ce que** la plaque (6) présente à l'opposé de l'ouverture oblongue (6a) une saillie (6c), qui est suivie après une courte partie rectiligne par une autre saillie (6d); **en ce que** le boîtier (1) est fermé par un couvercle (7) au moyen de deux broches (7a); **en ce que** le composant (2) est disposé dans le boîtier (1); **en ce que** le support (3) du disque de rotation (4) est disposé sur le cadre (2g) du composant (2) de telle sorte que la partie de liaison du cadre (2g) est simultanément la deuxième électrode de connexion (2e) de la varistance (2a); **en ce qu'**au travers de l'ouverture ovale (3d), la première électrode de connexion (2f) est disposée sur le corps de varistance (2a), ladite première électrode de connexion (2f) étant conçue de manière à présenter une partie coudée (2f') en contact avec la varistance (2a); **en ce qu'**une seconde partie (2f") de la première électrode de connexion (2f) est droite et courbée dans une partie (2f"') de manière à être parallèle à la deuxième électrode de connexion (2e); **en ce que** l'ouverture ovale (3d) a une taille et une forme telles que la première électrode de connexion (2f) de la varistance (2a) peut être simplement insérée à travers celle-ci, l'ouverture ovale (3d) étant positionnée à une telle distance angulaire à partir de la position de départ du disque de rotation (4) que le disque de rotation (4), après avoir tourné autour de la première fixation cylindrique (3b), recouvre l'ouverture ovale (3d) lorsque le disque (4) est en position finale; **en ce que** la première électrode de connexion (2f) est disposée à travers l'ouverture ovale (3d) sur la varistance (2a) au moyen d'un flux sensible à la température et fixé sur le côté supérieur du corps de varistance (2a); **en ce que** la première électrode de connexion (2f) maintient le disque de rotation (4) dans sa position de départ conjointement avec le ressort hélicoïdal (5) dans un état polarisé; **en ce que** le disque de rotation (4) est disposé en rotation dans l'évidement circulaire peu profond (3a) et à travers le trou circulaire (4a) sur la première fixation cylindrique (3b) du support (3); **en ce que** le ressort (5) est disposé au centre de l'évidement circulaire peu profond (3a) délimité par la bague circulaire basse (4b), la première partie (5a) du ressort (5) étant encliquetée dans la fente (3c) sur le support (3); **en ce qu'**après l'agencement de la première électrode de connexion (2f) à travers l'ouverture ovale (3d) et l'ouverture (4d) dans le disque (4) la deuxième partie du ressort (5) avec la partie semi-circulaire (5b) est disposée autour de la troisième fixation cylindrique (4e); **en ce que** l'ouverture (6b) de la plaque de verrouillage (6) est insérée dans une autre fixation cylindrique (3e) du support (3) et simultanément l'ouverture oblongue (6a) est insérée dans la troisième fixation cylindrique (4e) du disque de rotation (4); **en ce que** l'autre saillie (6d) insérée dans un palier (8a) est un témoin (8) signalant l'état initial.
